# EUROPÄISCHE PATENTSCHRIFT

(11) **EP 1 254 747 B1**
(45) Veröffentlichungstag und Bekanntmachung des Hinweises auf die Patenterteilung: **02.11.2006**
(21) Anmeldenummer: 01110724.0
(22) Anmeldetag: 03.05.2001
(51) Int. Cl.: B25J 19/00, B23K 26/08

(54) **Integration eines Lasers an einem Roboterarm**
Integration of a laser to a robot arm
Intégration d'un laser à un bras de robot

(43) Veröffentlichungstag der Anmeldung: 06.11.2002
(73) Patentinhaber: Robot Technology GmbH, 63801 Kleinostheim (DE)
(72) Erfinder: Maier, Stefan, 63768 Rottenberg (DE); Wechs, Thomas, 63911 Klingenberg (DE)
(74) Vertreter: Thürer, Andreas

(56) Entgegenhaltungen:
- EP-A- 0 280 739
- US-A- 4 539 462
- US-A- 4 694 139
- US-A- 4 698 483
- US-A- 4 703 157
- US-A- 4 892 992
- US-E- R E34 597
- PATENT ABSTRACTS OF JAPAN vol. 008, no. 112 (M-298), 25. Mai 1984 (1984-05-25) & JP 59 021491 A (SHINMEIWA KOGYO KK), 3. Februar 1984 (1984-02-03)

## Beschreibung

Die Erfindung betrifft einen Roboter mit einer ersten, zweiten und dritten Grundachse, wobei zumindest die dritte eine rotatorische Grundachse ist, und ein senkrecht dazu angeordnetes Armglied aufweist, und der Roboter mit einem Laser ausgerüstet ist, der in einem Lasergehäuse angeordnet ist, gemäß Anspruch 1.

US-A-4 703 157 offenbart einen Roboter mit einem Laser, der in Verlängerung eines Arms des Roboters angeordnet ist.

US 4 892 992 offenbart einen Roboter mit einem Laser, der außerhalb des Roboters angeordnet ist und dessen Laserstrahl in die Roboterachse eingeleitet wird.

Aus der EP 0 280 739 ist es bekannt, einem Laser an das Ende eines Roboters anzuordnen. Mittels eines rotierenden parabolisch geformten Spiegels wird der Laserstrahl umgelenkt und zugleich fokussiert.

Nachteilig ist es, dass hierdurch eine große Handachse gebildet wird, die eine größere Störkontur und eine hohe Traglast des Roboters zur Folge hat. Desweiteren ist die Bewegungsfreiheit des Roboters weitestgehend eingeschränkt.

Daher liegt der Erfindung die Aufgabe zugrunde, mittels einer Anordnung den Laser in einem Roboter so zu integrieren, dass die zuvor genannten Nachteile mittels einer wesentlich reduzierten Traglast und demzufolge einer wesentlich geringeren Störkontur zu eliminieren und die Bearbeitungsfreiheit des Roboters zu vergrößern.

Die Aufgabe wird durch die Merkmale des Anspruchs 1 gelöst.

Hervorzuheben an der Erfindung ist, dass eine Roboterachse durch ein Lasergehäuse mit einem integrierten Laser zu ersetzen ist und Kopfachsen des Roboters mit einer Spiegelumlenkung im Anschluß an das Lasergehäuse anzuordnen sind.
Um mittels eines standardgemäßem Roboters mit großer Bewegungsfreiheit sowie geringerem Gewicht die Störkonturen zu minimieren und dessen Reichweite variieren zu können, ist an einer Abtriebseinheit das Lasergehäuse direkt und in einem Winkel um 90° zu einer Mittelachse einer Achse 3 derart anzuordnen, dass der Austritt des Laserstrahls in die Richtung der zwei folgenden Kopfachsen erfolgt. Im Anschluss an dem Lasergehäuse ist der ersteren Kopfachse eine Antriebseinheit zuzuordnen.
Jeweils eine Drehdurchführung für Elektrosignale und für das Prozessgas in der ersteren Kopfachse (Achse 4) läßt einen unbegrenzten Drehbereich über 360° zu. Somit ist eine bessere Bauteilzugängigkeit und eine Zykluszeitersparnis gegeben.
Das freiwählbare Anbringen des Lasergehäuses in Richtung des Laserstrahls an die Abtriebseinheit der Achse 3 hat eine variablere Anpassung der Reichweite zur Folge.
Um mit dem Laserstrahl lotrecht auf die letztere Achse - einer Kopfachse - und auf dessen von vier Umlenkspiegeln letzteren Umlenkspiegel aufzutreffen sowie koaxial aus dieser Kopfachse wieder auszutreten, unterbleibt es, eine weitere Kopfachse verwenden zu müssen, ohne hierbei die Bewegungsfreiheit einzuschränken.
Um die Erfindung technisch realisieren zu können und den koaxialen Austritt des Laserstrahls zu gewährleisten, ist es erforderlich einen Teil der Umlenkspiegel auf die erstere Kopfachse - Achse 3 - und den restlichen auf die zweite Kopfachse - Achse 5 - anzuordnen. Somit erfolgt das Anordnen der ersten drei Umlenkspiegel auf die erstere Kopfachse und der vierte und letzte Umlenkspiegel auf die letztere Kopfachse.
Um diese Ungenauigkeiten und Störfaktoren zu minimieren zeichnen auch die Anordnungen verantwortlich, dass die erstere Kopfachse diese zugehörige Antriebseinheit mittels eines Getriebe unmittelbar zu verbinden ist, und dass in einem Gehäuse, welches der ersteren Kopfachse zugeordnet ist, die zweite Antriebseinheit und ein Getriebe für die zweite Kopfachse unterzubringen ist.

Anhand von Ausführungsbeispielen wird in Verbindung mit Zeichnungen die Erfindung näher erläutert. Es zeigen
- Figur 1: einen Schnitt der Hauptbestandteile des Roboters mit seinen Achsen 1 bis 5
- Figur 2: einen Schnitt der Rück- und Seitenansicht gemäß Figur 1
- Figur 3: einen Schnitt mit seinen Hauptbestandteilen der erfindungsgemäßen Lösung
- Figur 4: einen vergrößerten Ausschnitt zu der erfindungsgemäßen Lösung

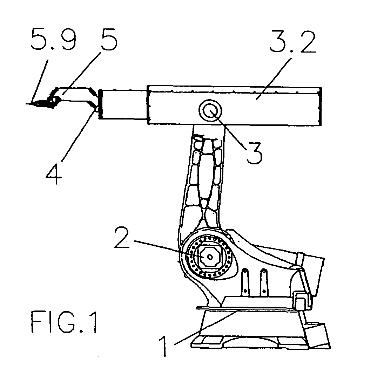

Die in **Fig. 1** dargestellten Bauteile, zum Beispiel eines Knickarmroboters, sind die Aneinanderreihung der einzelnen Achsen 1 bis 5 und dienen dem besseren Verständnis. Die Achsen 1 = **1**, 2 = **2** und 3 = **3** stellen hierbei die Grundachsen und die Achsen 4 und 5 die Kopfachsen **4** und **5** sowie als **5.9** bezeichnende Laserdüse dar.

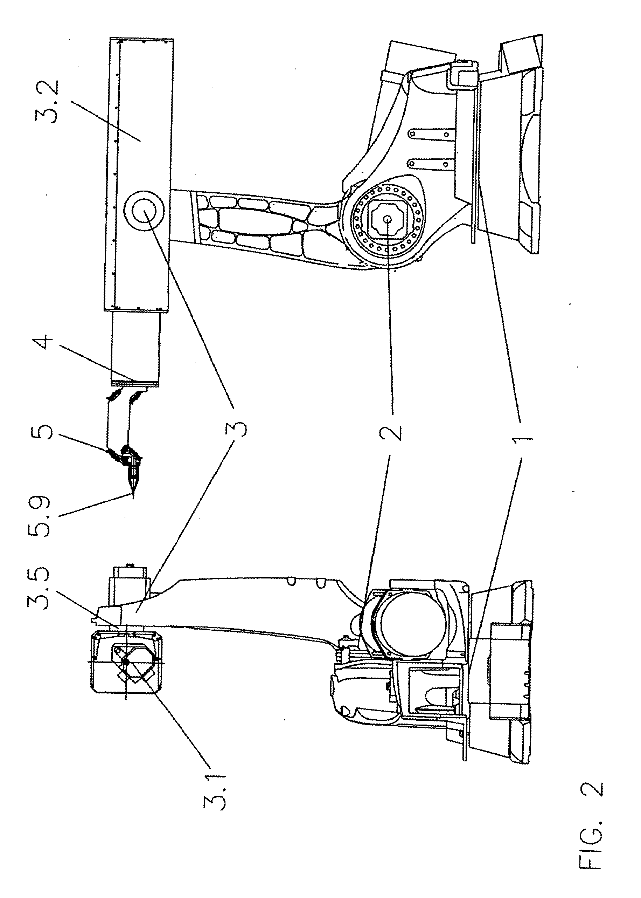

Ein Lasergehäuse **3.2** mit integriertem Laser 3.1 an einer Antriebseinheit **3.5** der Achse **3** ist in Verbindung mit der Fig.1 als deren Rückansicht dargestellt. Dabei soll gleichzeitig verdeutlicht werden, dass die Achsen **1**; **2**; **3** als Grund- und zugleich als Trägerachsen zum Tragen des Lasergehäuses **3.2** dienen. Die Kopfachsen **4**; **5** mit der Laserdüse **5.9** dienen zum Umlenken des Laserstrahls 6. (Fig. 2)

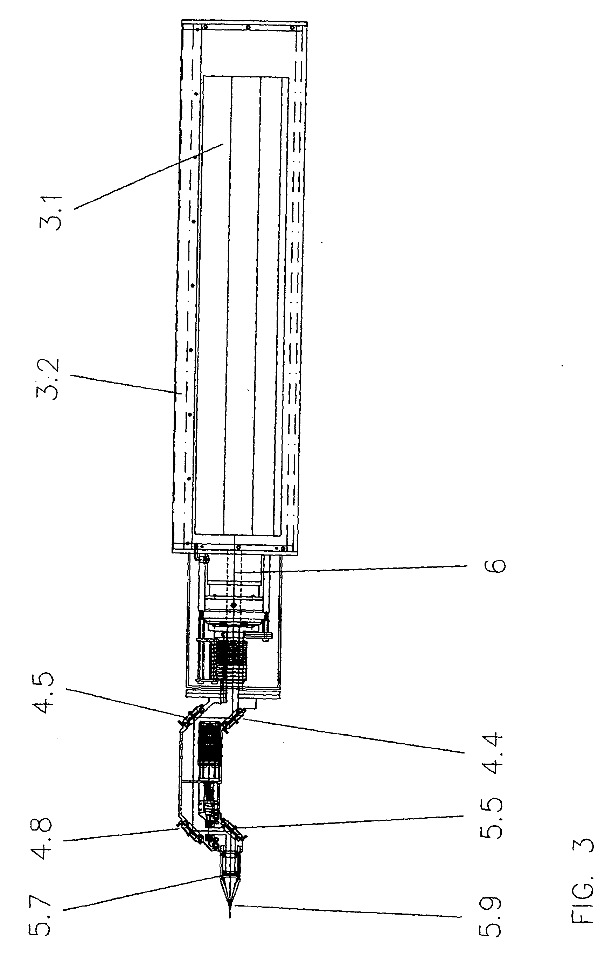

**Fig. 3** zeigt den vorderen Bereich eines Roboters mit dem erfindungsgemäßen Lösungsgedanken, dem angebauten und zugleich integrierten Laser **3.1** an die Achse **3**. Der Laserstrahl 6 ist auf einen ersten Umlenkspiegel **4.4** der Kopfachse **4** gerichtet und mit seinem Lasergehäuse **3.2** direkt in einem Winkel um 90° an eine Abtriebseinheit **3.5** der Achse **3** des Roboters anzubringen, so dass der Strahlaustritt aus dem Laser **3.1** in Richtung der Kopfachsen **4**; **5** erfolgt. Der Laserstrahl **6** ist auf den ersten Umlenkspiegel **4.4** der Kopfachse **4** zu führen, der diesen Laserstrahl **6** auf den zweiten Umlenkspiegel **4.5** ebenfalls der Kopfachse **4** umlenkt. Von hier geht der Laserstrahl **6** auf den dritten Umlenkspiegel **4.8**, der den Laserstrahl **6** wiederum auf den vierten Umlenkspiegel **5.5** umlenkt. Nachfolgend geht der Laserstrahl **6** über eine Fokussieroptik **5.7** und verlässt den Roboter über eine Laserdüse **5.9**. Hierbei besteht die Möglichkeit, das Lasergehäuse **3.2** an jedem beliebigen Robotertyp, auch mit geringen Modifikationen, anzuordnen.

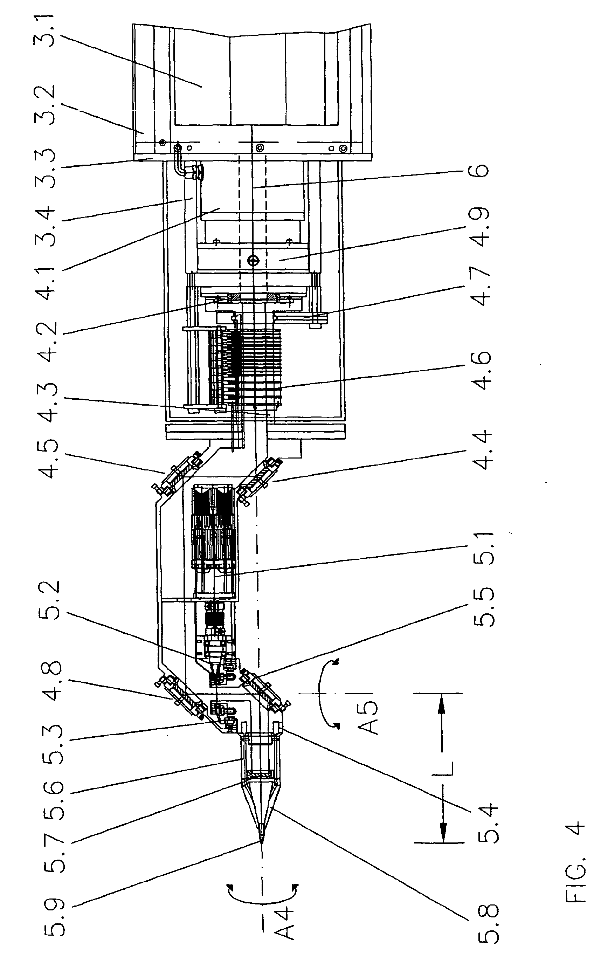

Gemäß **Fig. 4** folgt im Anschluss an diesem Lasergehäuse **3.2** ein Anschlussflansch **3.3** mit einem Aufnahmering **3.4** für die Antriebseinheit **4.1** der Kopfachse **4**. Nachfolgend dieser Antriebseinheit **4.1** folgt ein Getriebe **4.9** mit seinem Abtriebsflansch **4.2**. Daran folgt ein Trägerrohr **4.3** mit Innenbohrungen als Verbindung zur Kopfachse **4**. Auf dem Trägerrohr **4.3** ist jeweils eine Drehdurchführung **4.6** für die Elektrosignale und eine Drehdurchführung **4.7** für das Prozessgas anzuordnen. Das Prozessgas selbst kann ein CO₂ oder ein anderer Typ eines Gases sein.
In der Kopfachse **4** befinden sich die Umlenkspiegel **4.4**; **4.5**; **4.8**, als auch eine Antriebseinheit **5.1** für die Kopfachse **5** und ein Getriebe **5.2** für die Kopfachse **5**. In dem Gehäuse **5.8** der Kopfachse **5** ist die Fokussieroptik **5.7** über ein Schnellwechselfach eingebaut sowie der Kanal **5.6** für das Prozessgas integriert. Die Prozessgaszuführung ist von der Drehdurchführung **4.7** zu einem Anschluss **5.4** für das Prozessgas zu führen.
Die Darstellung einer Drehachse **A4** der Kopfachse **4** als auch einer Drehachse **A5** der Kopfachse 5 dienen dem besseren Verständnis. Gegenüber der im Stand der Technik benannten Lösung, mittels einer langen Handlänge zu arbeiten, ist hier auf Grund der erfindungsgemäßen Lösung, dass das Lasergehäuse **3.2** direkt an der Abtriebseinheit **3.5** in einem Winkel um 90° zu der Mittelachse der Achse **3** und im Anschluss an dem Lasergehäuse **3.2** die Antriebseinheit **4.1** der ersteren Kopfachse **4** zuzuordnen ist, der Roboter mit einer wesentlich kürzeren Handlänge **L** zu betätigen.

| **Pos.** | **Bauteil** | **Beschreibung** |
|---|---|---|
| 1 | Achse 1 | |
| 2 | Achse 2 | |
| 3 | Achse 3 | |
| 3.1 | Laser | |
| 3.2 | Lasergehäuse | |
| 3.3 | Anschlussflansch | |
| 3.4 | Aufnahmering Antriebseinheit Achse 4 | |
| 3.5 | Abtriebseinheit Achse 3 | |
| 4 | Achse 4 | |
| 4.1 | Antriebseinheit Achse 4 | |
| 4.2 | Abtriebsflansch Achse 4 | |
| 4.3 | Trägerrohr mit Innenbohrung | |
| 4.4 | Umlenkspiegel Nr. 1 | |
| 4.5 | Umlenkspiegel Nr. 2 | |
| 4.6 | Drehdurchführung Elektrosignale | |
| 4.7 | Drehdurchführung Prozessgas | |
| 4.8 | Umlenkspiegel Nr. 3 | |
| 4.9 | Getriebe Achse 4 | |
| 5 | Achse 5 | |
| 5.1 | Antriebseinheit Achse 5 | |
| 5.2 | Getriebe Achse 5 | |
| 5.3 | Lager Achse 5 | |
| 5.4 | Anschluss für Prozessgas | |
| 5.5 | Umlenkspiegel Nr. 4 | |
| 5.6 | Kanal für Prozessgas | |
| 5.7 | Fokosieroptik | |
| 5.8 | Gehäuse Achse 5 | |
| 5.9 | Laserdüse | |
| 6 | Laserstrahl | |

## Patentansprüche

1. Roboter mit einer ersten (1), zweiten (2) und dritten (3) Grundachse, wobei zumindest die dritte (3) eine rotatorische Grundachse ist, und ein senkrecht dazu angeordnetes Armglied aufweist, und der Roboter mit einem Laser (3.1) ausgerüstet ist, der in einem Lasergehäuse (3.2) angeordnet ist, wobei das durch eine Abtriebseinheit (3.5) der dritten Grundachse (3) angetriebene Armglied des Roboters im wesentlichen durch das Lasergehäuse (3.2) mit einem darin integrierten Laser gebildet ist, wobei nachfolgend der Laserstrahl (6) in eine erste Kopfachse (4) umgelenkt wird, mit einer nachfolgenden Spiegelumlenkung in eine zweite Kopfachse (5), mit einer nachfolgenden Bearbeitungsoptik (5.7), wobei im Anschluss an das Lasergehäuse (3.2) die Antriebseinheit (4.1) der ersten Kopfachse (4) angeordnet ist.

2. Roboter nach Anspruch 1, **dadurch gekennzeichnet, dass** auf einem der Kopfachse (4) zugeordneten Trägerrohr (4.3) eine Drehdurchführung (4.6) für Elektrosignale angeordnet ist.

3. Roboter nach einem der Ansprüche 1 oder 2, **dadurch gekennzeichnet, dass** auf einem der Kopfachse (4) zugeordneten Tägerrohr (4.3) eine Drehdurchführung (4.7) für das Prozessgas angeordnet ist.

4. Roboter nach einem der Ansprüche 1 bis 3, **dadurch gekennzeichnet, dass** das Lasergehäuse (3.2) an die Abtriebseinheit (3.5) der Achse (3) in Richtung des Laserstrahls (6) freiwählbar anzubringen ist.

5. Roboter nach einem der Ansprüche 1 bis 4, **dadurch gekennzeichnet, dass** zur Umlenkung des Laserstrahls (6) vier Umlenkspiegel (4.4, 4.5, 4.8, 5.5) anzuordnen sind.

6. Roboter nach Anspruch 5, **dadurch gekennzeichnet, dass** ein Teil der Umlenkspiegel (4.4, 4.5, 4.8) der ersten Kopfachse (4) zuzuordnen ist.

7. Roboter nach Anspruch 5 oder 6, **dadurch gekennzeichnet dass** ein Teil der Umlenkspiegel (5.5) der zweiten Kopfachse (5) zuzuordnen ist.

8. Roboter nach einem der Ansprüche 1 bis 7, **dadurch gekennzeichnet, dass** zwischen dem Laser (3.1) und der Fokussieroptik (5.7) für die Kopfachsen (4, 5) jeweils eine Antriebseinheit (4.1) zuzuordnen ist.

9. Roboter nach einem der Absprüche 1 bis 8, **dadurch gekennzeichnet, dass** zum Antreiben der Kopfachse (4) die Antriebseinheit (4.1) mit einem Getriebe (4.7) unmittelbar zu verbinden ist.

10. Roboter nach einem der Absprüche 1 bis 9, **dadurch gekennzeichnet, dass** in einem Gehäuse (5.8) der Kopfachse (4) die Antriebseinheit (5.1) und ein Getriebe (5.2) für die Kopfachse (5) unterzubringen sind.

## Claims

1. Robot with a first (1), a second (2) and a third (3) basic axis, where at least the third (3) axis is a rotatory basic axis, and exhibits a vertically arranged arm member, and where the robot is equipped with a laser (3.1), which is arranged in a laser housing (3.2), where the arm member of the robot, which is driven by a drive unit (3.5) of the third basic axis, is essentially built of the laser housing (3.2) with an integrated laser, where subsequently the laser beam (6) is deflected into a first head axis (4), with a subsequent deflection by mirror into a second head axis (5), with a subsequent processing optics (5.7), where the drive unit (4.1) of the first head axis (4) is arranged subsequently to the laser housing (3.2).

2. Robot according to claim 1, **characterized in that** a rotatable lead-through for a rotating axis (4.6) for electric signals is arranged on a mounting tube (4.3) assigned to the head axis (4).

3. Robot according to claim 1 or 2, **characterized in that** a rotatable lead-through for a rotating axis (4.6) for processing gas is arranged on a mounting tube (4.3) assigned to the head axis (4).

4. Robot according to one of claims 1 to 3, **characterized in that** the laser housing (3.2) is to be attached (3) arbitrarily to the drive unit (3.5) of the axis (3) in direction of the laser beam (6) .

5. Robot according to one of claims 1 to 4, **characterized in that** four deflecting mirrors (4,4, 4,5, 4,8, 5,5) are to be arranged for the deflection of the laser beam (6).

6. Robot according to one of claims 1 to 5, **characterized in that** part of the deflecting mirrors (4,4, 4,5, 4,8) is assigned to the first head axis (4).

7. Robot according to one of claims 1 to 6, **characterized in that** part of the deflecting mirrors (5.5) is assigned to the second head axis (5).

8. Robot according to one of claims 1 to 7, **characterized in that** a drive unit (4.1) is to be assigned between the laser (3.1) and the focusing optics (5.7) for the head axis (4, 5) respectively.

9. Robot according to one of claims 1 to 8, **characterized in that** for actuating the head axis (4) the drive unit (4.1) is to be connected directly to a gear (4.7).

10. Robot according to one of claims 1 to 9, **characterized in that** the drive unit (5.1) and a gear (5.2) for the head axis (4) are to be placed in a housing (5.8) of the head axis (4).

## Revendications

1. Robot avec un premier (1), deuxième (2) et troisième (3) axe de base, dans lequel au moins le troisième (3) est un axe de base rotatif, et présente un membre d'un bras disposé perpendiculairement, et le robot présente un laser (3.1), qui est disposé dans un boîte de laser (3.2), le membre d'un bras du robot, qui est actionner par une unité de actionnement (3.5) du troisième axe de base (3), pour l'essentiel est formé par le boîte de laser (3.2) avec un laser intégré, le rayon laser (6) est tourné suivante dans un premier axe de tête (4), avec un détour de miroir suivant dans un deuxième axe de tête (5), avec une optique de traitement (5.7) suivante, l'unité de actionnement (4.1) du premier axe de tête (4) est disposée ensuite au boîte de laser (3.2).

2. Robot selon la revendication 1, charactérisé en ce que un passage rotatif (4.6) pour des électrosignaux est disposé sur un tube-support (4.3), qui est assigné l'axe de tête (4).

3. Robot selon l'un des revendications 1 ou 2, charactérisé en ce que un passage rotatif (4.6) pour des gaz de procédure est disposé sur un tube-support (4.3), qui est assigné l'axe de tête (4).

4. Robot selon l'un des revendications 1 à 3, **charactérisé en ce que**'il faut attacher le boîte de laser (3.2) à l'unité de actionnement (3.5) de l'axe (3) en direction du rayon laser (6) d'une facon aléatoire.

5. Robot selon l'un des revendications 1 à 4, charactérisé en ce que pour tourner le rayon laser (6) il faut disposer quatre miroirs de détour (4.4, 4.5, 4.8, 5.5).

6. Robot selon la revendication 5, **charactérisé en ce qu'**il faut assigner une partie des miroirs de détour (4.4, 4.5, 4.8) à premier l'axe de tête (4).

7. Robot selon l'un des revendications 5 ou 6, charactérisé en ce qu'il faut assigner une partie des miroirs de détour (5.5) à deuxième l'axe de tête (5).

8. Robot selon l'un des revendications 1 à 7, charactérisé en ce qu'entre le laser (3.1) et l'optique de focalisation (5.7) il faut assigner une unité de actionnement (4.1) pour les axes de tête (4, 5) respectivement.

9. Robot selon l'un des revendications 1 à 8, charactérisé en ce que pour actionner l'axe de tête (4) il faut lier l'unité de actionnement (4.1) directement à une boîte de vitesses (4.7).

10. Robot selon l'un des revendications 1 à 9, charactérisé en ce qu'il faut disposer l'unité de actionnement (5.1) et une boîte de vitesses (5.2) pour l'axe de tête (5) dans un boîte (5.8) de l'axe de tête (4).
